# EUROPEAN PATENT SPECIFICATION

(11) **EP 2 416 524 B1**
(45) Date of publication and mention of the grant of the patent: **15.04.2020**
(21) Application number: 11167824.9
(22) Date of filing: 27.05.2011
(51) Int. Cl.: H04L 9/32

(54) **System and method for secure transaction of data between wireless communication device and server**
System und Verfahren zur sicheren Übertragung von Daten zwischen einem drahtlosen Kommunikationsgerät und einem Server
Système et procédé de transaction sécurisée de données entre un dispositif de communication sans fil et un serveur

(30) Priority: 09.07.2010 IN 1976MU2010
(43) Date of publication of application: 08.02.2012
(73) Proprietor: Tata Consultancy Services Limited, Maharashtra (IN)
(72) Inventor: Natarajan, Vijayarangan, 600086 Chennai (IN)
(74) Representative: Heinze, Ekkehard

(56) References cited:
- US-A1- 2004 243 801
- US-A1- 2008 313 464
- US-A1- 2009 217 043
- "Chapter 10: Identification and Entity Authentication ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , 1 October 1996 (1996-10-01), XP001525010, ISBN: 978-0-8493-8523-0 Retrieved from the Internet: URL:http://www.cacr.math.uwaterloo.ca/hac/
- AYDOS M ET AL: "High-speed implementation of an ECC-based wireless authentication protocol on an ARM microprocessor", IEE PROCEEDINGS : COMMUNICATIONS, INSTITUTION OF ELECTRICAL ENGINEERS, GB, vol. 148, no. 5, 16 October 2001 (2001-10-16), pages 273-279, XP006017362, ISSN: 1350-2425, DOI: 10.1049/IP-COM:20010511

## Description

### FIELD OF THE INVENTION

The present application relates to the field of wireless communications. Particularly, this application relates to a system and method for secure transaction of data between at least one wireless communication device and a server by using lightweight Extensible Authentication Protocols (EAPs) based on ECC (Elliptic Curve Cryptography) and SKE (Symmetric Key Encryption) mechanisms.

### BACKGROUND OF THE INVENTION

In the mobile and wireless communication, authentication methods are generally used to gain network access. The communication server (either for mobile or wireless) provides accessibility must have a set of processes and protocols to verify user's identity. There is a need of a standard way for verifying user's logon, monitoring user's network usage and customer billing. Currently there are standards and protocols that can fulfill the above criteria for Authentication, Authorization and Accounting (AAA) purposes. But some of them are not secure and their performance will not meet 3G mobile communication requirements.

However, the current mobile and wireless authentication mechanisms employ the usage of Certificates. The Authorization protocols must support some notion of a "charging certificate". These Certificates being heavy weight in size affect the performance of the Mobile Application. With the conservative standards set by many Institutions chiefly in the mobile banking sector there is a requirement for light weight protocols which help in ensuring optimum performance of mobile applications through wireless media.

Moreover, mobile and wireless devices, like smart phones, PDAs, cellular phones and Remote control systems, play an increasingly important role in the digital environment. The pervasive use of mobile and wireless devices brings new security and privacy risks and with the extensive use of mobile devices consumers continuously leave traces of their identities and transactions, sometimes even by just carrying the devices around in their pockets. Since providing true privacy is hard as hiding identity information is irrelevant as long as some other linkable information is associated with the messages, the usage of a light weight protocol will help provide effective solutions to a majority of mobile and wireless applications.

Some of the inventions which deal with providing systems and methods for secure transaction of data between at least one wireless communication device and a server are:
US Patent Publication Number 20090180612 filed by Leu et al discloses about an authentication method employing ECC. It is applicable to a mobile broadcast TV system having one or more head end systems, at least a transmitter, and at least a mobile set. The authentication method comprises at least one request message from mobile sets simultaneously or in a short period of time arriving at a head end system for authentication; manipulating each broadcast authentication message by ECC; manipulating each service request message by ECC and pairing operation; performing a mutual authentication between the head end system and mobile sets by ECC and pairing operation; and broadcasting one group of authentication messages to all the mobile sets of many requests arrived at the head end system simultaneously or in a short period of time for the same service.

United States Patent number 7243232 filed by Vanstone et al discloses about a key establishment protocol that includes the generation of a value of cryptographic function, typically a hash, of a session key and public information. This value is transferred between correspondents together with the information necessary to generate the session key. Provided the session key has not been compromised, the value of the cryptographic function will be the same at each of the correspondents. The value of the cryptographic function cannot be compromised or modified without access to the session key.

United States Patent number 7716482 filed by Jung et al discloses about a conference session key distribution method used in an ID-based cryptographic system includes selecting two different temporary secret keys, generating a message and generating session key generation variables using the temporary secret keys of a session initiating party. Only valid participating parties receive the session key generation variables. Each party determines the session shared key from the session key generation variables.

United States Patent number 6658476 filed by Van C. Van discloses about a client-server protocol support list in the context of standard request-response protocols such as the HyperText Transport Protocol (HTTP). In one embodiment, a method includes receiving a request according to a predetermined transport protocol. In response to receiving the request, the method transmits a list of supported client-server protocols in order of server preference, in accordance with the predetermined transport protocol. In one embodiment, the request is an OPTIONS request under HTTP. In one embodiment, the list is not a complete list of the protocols supported by the server.

US Patent Publication number 20100031051 filed by Machani et al discloses about a method of authenticating and encrypting a client-server communication, comprising the steps of: a) generating a first one-time password (OTP1) and a second one-time password (OTP2) from a cryptographic token; b) generating an encryption key (K_ENC) and a MAC key (K_MAC) based on OTP2; c) preparing and protecting the client data using K_ENC and K_MAC; d) sending a request message from the client to the server, the request message containing the protected client data, a cryptographic token identifier (TID) and OTP1; e) validating OTP1 at the server, and generating OTP2 at the server upon successful validation; f) deriving K_ENC and K_MAC from OTP2 at the server; g) processing the request message and generating result data h) encrypting the result data using K_ENC and creating a digest using K_MAC; i) sending the encrypted result data to the client; and i) decrypting the result data at the client using K_ENC and verifying the authenticity of the result data using K_MAC.

United States Patent number 6189098 filed by Burton S. Kaliski, Jr. discloses about a protocol for establishing the authenticity of a client to a server in an electronic transaction by encrypting a certificate with a key known only to the client and the server. The trust of the server, if necessary, can be established by a public key protocol. The client generates and sends over a communications channel a message containing at least a part of a certificate encrypted with the server's public key or a secret session key. The server receives and processes the message to recover at least part of the certificate, verifies and accepts it as proof of the client's authenticity.

United States Publication number filed 20070189527 by Brown et al discloses about an elliptic curve random number generator avoids escrow keys by choosing a point Q on the elliptic curve as verifiably random. An arbitrary string is chosen and a hash of that string computed. The hash is then converted to a field element of the desired field, the field element regarded as the x-coordinate of a point Q on the elliptic curve and the x-coordinate is tested for validity on the desired elliptic curve. If valid, the x-coordinate is decompressed to the point Q, wherein the choice of which is the two points is also derived from the hash value. Intentional use of escrow keys can provide for back up functionality. The relationship between P and Q is used as an escrow key and stored by for a security domain. The administrator logs the output of the generator to reconstruct the random number with the escrow key.

United States Publication number 20060098819 filed by Zeng et al discloses about methods, devices and systems for generating a plurality of public keys from one private key with the same generator of a group. A public key cryptosystem is also disclosed for generating a plurality of anonymous public keys all of which relate to the same party used for secure communications. Those anonymous public keys are generated using the same generator from one single private key. With the invention, computation is reduced, memory can be saved and security level can be improved.

United States Patent number 6563928 filed by Vanstone et al teaches that a technique of validating the key exchange messages using ECC to prevent a man-in the middle attack.

United States Patent US 2004/243801 A1 discloses a portable handheld computing apparatus comprising acquiring means for acquiring an first integrity metric of a first computer apparatus for determining if the first computer apparatus is a trusted entity, the acquiring means being responsive to input means for initiating the acquisition; and presentation means for presenting to a user an indication that the first computer apparatus is a trusted device. It discloses the authentication of a portable security challenger or a trusted device through a secure protocol wherein the protocol uses a public/private key pair for encryption and signature and an optional session key (SK) for further communication.

Chapter 10: "Identification and Entity Authentication ED- Menezes A J; Van Oorschot P C; Vanstone S A HANDBOOK OF APPLIED CRYPTOGRAPHY; [CRC PRESS SERIES ON DISCRETE MATHEMATICS AND ITS APPPLICATIONS] "deals with techniques relating to identification and entity authentication, and identity verification. The techniques allow the verifier party to gain assurance that the identity of claimant is as declared, thereby preventing impersonation, by the verifier checking the correctness of a message which demonstrates that the claimant is in possession of a secret associated by design with the genuine party. It discloses the properties of identification protocols, various passwords schemes, cryptographic challenge-response protocols based on symmetric-key encryption and public-key techniques.

United States patent US2009/217043 A1 discloses a method for enabling mutual authentication of nodes in a wireless communication network. The method includes processing at a first node a beacon message received from a second node, wherein the beacon message comprises a first nonce value. Further, an association request message comprising a certificate of the first node, a first signed block of authentication data, and a second nonce value is transmitted from the first node to the second node. It further discloses the verification of a signature of the certificate of the first node and a signature of the first signed block of authentication data by the second node. An association reply message received from the second node is then processed at the first node, whereby the first node verifies a signature of a certificate of the second node and verifies a signature of a second signed block of authentication data.

United States Patent US 2008/313464 A1 discloses a method of encrypting broadcast and multicast data communicated between two or more parties, such as over a virtual private network or a secure wireless connection where each party has knowledge of a shared key. The key is calculated using values, some of which are communicated between the parties, so that the shared key is not itself transferred. The subject-matter discloses a method for creation of a shared broadcast session key and encryption of broadcast data communicated between two or more parties, a method for providing two or parties with a shared broadcast session key for encrypting broadcast data transferred between the two or more parties and a method of creating a shared multicast session key and encrypting multicast data transferred between two or more parties, each party having knowledge of a shared base session key. Broadly, the first method discloses generating a first random number by the first party, encrypting the the first random number to form a first ciphertext and communicating it to the second party, whreien the first random number may be encrypted using a pre-provisioned key. The second party decrypts the first ciphertext to yield the first random number and generates a second random number forming a base session key and a broadcast session key, wherein the first ciphertext may be decrypted using a pre-provisioned key. The base session key may be formed by concatenating the first random number and the second random number, hashing the concatenated number eight times in succession, and performing an XOR function on each group of five bits of the result. The broadcast session key may be formed by generating a third random number and a fourth random number, concatenating the third random number and the fourth random number, hashing the concatenated number eight times in succession, and performing an XOR function on each group of five bits of the result. Further, the second party determines an offset as a function of the base session key and broadcast session key(performing an XOR function), encrypts a second random number and the offset to form a second ciphertext and communicates to the first party which then decrypts it to yield the second random number and the offset, forming the base session and the broadcast session key as a function of the base session key and the offset.

AYDOS M ET AL: "High Speed implementation of an ECC-based wireless authentication protocol on an ARM microprocessor" IEE PROCEEDINGS: COMMUNICATIONS, INSITIUTION OF ELECTRICAL ENGINEERS, GB discloses the results of the implementation for elliptic curve cryptography over the field GF(p) and emphasizes on the benefits of 'higher strength per key bit' which include higher speeds, lower power consumption and smaller bandwidth requirements, It deals with designing a high-speed and scalable cryptographic library suitable for implementation on low-power microprocessors and digital signal processors wherein the library supports the ECDSA signature generation and verification operations and also contains SHA and DES algorithms necessary for implementation of the wireless authentication protocols.

None of the above mentioned prior arts provide a system and method for a lightweight and high speed certificateless extensible authentication protocols (EAPs), which occupy less memory space for storage, for mobile and wireless communications and also provide EAPs which are suitable for wireless communication devices enabled with 2G, 3G or 4G networks.
Thus, in the light of the above mentioned prior art, it is evident that, there is a need to have a system and method which:
- Solves Confidentiality, Authentication, Authorization and Accounting (CAAA) issues for mobile phones and wireless devices at an affordable cost;
- Provides a certificateless extensible authentication protocols (EAPs) for mobile and wireless communications;
- Provides two way authentication in comparison to the current one way authentication standards; and
- Provides extensible authentication protocols (EAPs) based on the ECC (Elliptic Curve Cryptography) and SKE (Symmetric Key Encryption) mechanisms (with a suitable permutation) which are easy to deploy on existing wireless communication devices.

### SUMMARY OF THE INVENTION

According to the present invention, there are provided a system and methods according to the independent claims. Further aspects of the invention are set forth in the following description, the drawings and the dependent claims.

### BRIEF DESCRIPTION OF THE DRAWINGS

The foregoing summary, as well as the following detailed description of preferred embodiments, is better understood when read in conjunction with the appended drawings. There is shown in the drawings example embodiments, however, the application is not limited to the specific system and method disclosed in the drawings.
Figure 1 illustrates the secure transaction of data using EAP Protocol based on ECC (Elliptic Curve Cryptography) mechanism between server and wireless communication device.
Figure 2 illustrates the secure transaction of data using EAP Protocol based on SKE (Symmetric Key Encryption) mechanism-1 between server and wireless communication device.
Figure 3 illustrates the secure transaction of data using EAP Protocol based on SKE (Symmetric Key Encryption) mechanism-2 between server and wireless communication device.
Figure 4 illustrates flow diagram with performance by using lightweight EAP Protocols for secure transaction of data between wireless communication device and server.

### DETAILED DESCRIPTION OF THE INVENTION

Some embodiments, illustrating its features, will now be discussed in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any methods, and systems similar or equivalent to those described herein can be used in the practice or testing of embodiments, the preferred methods, and systems are now described. The disclosed embodiments are merely exemplary.

The Extensible Authentication Protocol (EAP) is an Internet standard that provides an infrastructure for network access clients and authentication servers (RFC 3748). It has applications in wireless networks and PPP connections. EAP does not specify the authentication mechanism itself but the way it is negotiated by the communicating parties. There are attacks due to no proper authentication protocols in EAP.

Accordingly, the present application provides a system and method for a set of Extensible Authentication Protocols (EAPs) based on ECC (Elliptic Curve Cryptography) and SKE (Symmetric Key Encryption) mechanisms (with a suitable permutation) that can serve Confidentiality, Authentication, Authorization and Accounting (CAAA) issues at an affordable cost.

The present application used ECC and SKE algorithms in the proposed EAP schemes. In the ECC as well SKE based EAPs, there is no certificates exchanged between wireless communication device and server. During the communication, a permutation technique (cubing a random number w.r.to a prime p = 2 mod 3)) is used between the wireless communication device and the server ends in order to avoid reply attack. The defined permutation: r → r3 = r3 mod p (where p = 2 mod 3) is a bijective map employed as a crucial role in the proposed EAPs. There are three authentication protocols proposed below that will fulfill CAAA issues.

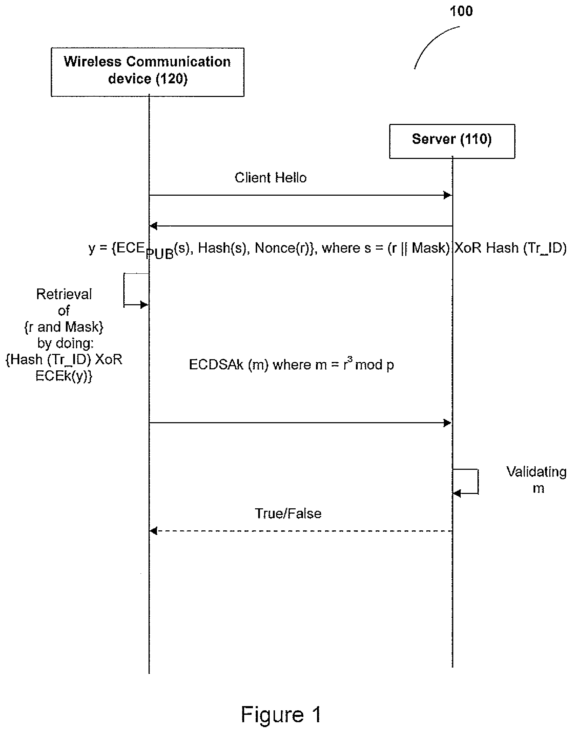

Figure 1 illustrates the secure transaction of data using EAP Protocol based on ECC (Elliptic Curve Cryptography) mechanism between server and wireless communication device. A system 100 comprises a server 110 and a wireless communication device 120 is communicatively coupled with each other via communication network, wherein the communication network can be selected from the group of Wide area network (WAN), Local Area Network (LAN) or Metropolitan Area Networks (MAN), internet, intranet, etc. In a preferred embodiment, the communication network is internet. The wireless communication device 120 can be selected from one of the group of mobile handsets, smart phones, PDAs, cellular phones, or tiny devices and the wireless communication device enabled with 2G, 3G, or 4G networks. In a preferred embodiment, the wireless communication device 120 is mobile phone.

A method of communication used in the above said system 100 comprising receiving, from at least one wireless communication device 120, a connection attempt to access a server 110, performing an authentication process using lightweight Extensible Authentication Protocol (EAP) based on the Elliptic Curve Cryptography (ECC) mechanism to facilitate the wireless communication device 120 prior to being allowed access to the server 110, wherein the said authentication process comprising the following steps:
In the first step of the proposed method, the wireless communication device 120 initiates the communication by sending client hello message to the server 110, wherein the client hello message includes a list of encryption algorithms that the wireless communication device 120 is prepared to use and some challenge data to be used to authenticate the server 110. The message contains the following fields:

| **CLIENT HELLO MESSAGE** | |
|---|---|
| **Field** | **Length** |
| The message type (client hello) | 8 bits |
| The SSL version number (currently 2) | 16 bits |
| The length of the cipher list | 16 bits |
| The length of the session identifier | 16 bits |
| The length of the challenge data | 16 bits |
| The cipher list | variable |
| The session identifier | 16≤ data ≤ 32 bytes |
| The challenge data | variable |

The session identifier is used to match the current request with a previous one, avoiding the need for repeated authenticate and key exchange if two systems have frequent communication. When keys are selected the server 110 will cache these and, if the wireless communication device 120 provides a session identifier in the client hello message the server 110 will search the cache for this session identifier. According to one exemplary embodiment, the message contains the above mentioned fields as well as additionally 'buffer memory' field having the length of 32 bits. The field and length of the client hello message can be varied based on the requirements.

In the second step, the server 110 generates a random number 'r' upon receiving client hello message. According to one exemplary embodiment, the size of the random number 'r' is 100-bit. Then the server 110 computes a resultant masking process of random number { s = (r ∥ Mask) XoR Hash(Tr_ID)} using the generated random number 'r', Mask, a transaction ID by matching hash function, wherein the Mask = 156-bits. Subsequently the server 110 encrypts a message with the resultant masking process of random number 's' thereby matching hash function, adding a nonce value for security with help of a public key 'PUB' of the wireless communication device 120 using an ECE Encryption algorithm and then the server 212 sends the encrypted message {y = ECEPUB(s), Hash(s), Nonce(r)} to the wireless communication device 120.

In the third step, the wireless communication device 120 retrieves the random number 'r' and the Mask { Hash(Tr_ID) XoR ECEk(y)} thereby matching hash function with help of a private key 'k' of the wireless communication device 120 upon receiving the encrypted message thereby using an ECE Decryption algorithm and subsequently the wireless communication device 120 splits the random number 'r' and the Mask and then subsequently verifies the values of the random number with the Nonce value for security and the resultant masking process of random number 's' with hash function.

In the fourth step, the wireless communication device 120 generates and adds the signature {signs} with message having a resultant value 'm', wherein the resultant value 'm' {m = r3 mod p = a 137-bit number} is obtained using permutation technique of the random number 'r', with respect to its private key 'k' thereby using an ECDSA-163 algorithm and subsequently the wireless communication device 120 sends the resultant message {sig_value} to the server 110.

In the fifth step, the server 110 verifies the signature {sig_value} of the received resultant message with help of the public key 'PUB' of the wireless communication device 120 using ECDSA-163 algorithm and subsequently the server 110 retrieves the resultant value 'm' { r3 mod p }by using permutation technique of the random number 'r'.

In the final step, the server 110 sends the response upon verifying the signature of the received resultant message to the wireless communication device 120.

Before initiating the communication in the above said system 100, initially, the server 110 registers the device and IMEI numbers of the wireless communication device 120 and then distributing customer identity and transaction identity (Cust_ID and Tr_ID) to each wireless communication devices 120 prior to being allowed access to the server 110.

According to one exemplary embodiment, the wireless communication device 120 is mobile phone. Accordingly, the server 110 registers mobile and IMEI numbers and distributes customer identity and transaction identity (Cust_ID and Tr_ID) to each mobile 120 prior to being allowed access to the server 110. The wireless communication device 120 uses its private key 'k' of 163-bits for Elliptic Cryptography (EC) decryption and EC signature generation and uses its public key 'PUB' for Elliptic Cryptography (EC) decryption and EC signature verification and a known Pseudo Random Number Generator (PRNG) which accepts a seed for generating the random numbers.

According to one embodiment, before initiating the communication in the above said system 100, initially an (Elliptic Curve Cryptography) ECC-163 set up is arranged between the wireless communication device and the server.

### Example of the secure transaction of data using EAP Protocol based on ECC (Elliptic Curve Cryptography) mechanism:

1. Tr_ID = 35422
2. Hash(Tr_ID) = 95405401234511
3. Prime number p = 101 where p is 2 mod 3
4. Wireless communication device's private key k = 199
5. Wireless communication device's public key PUB = (232, 123)
6. Server generates a random number r = 124325
7. Server computes s = 1243255783459321 XoR 95405401234511 = 1192391475877302, where Mask = 5783459321.
8. Server uses PUB and sends {(23241,34343), 3443221, 15} to the wireless communication device
9. Wireless communication device uses k on (23241, 34343) using EC Decryption and gets s from which the wireless communication device retrieves r = 124325.
10.Wireless communication device computes m = r³ mod p = 87, signs m w.r.to k using ECDSA-163 algorithm and sends the sig_value = {4547, 3434} to the server.
11.Server computes m =r³ mod p = 87 and uses the public key of client for verifying the signature.

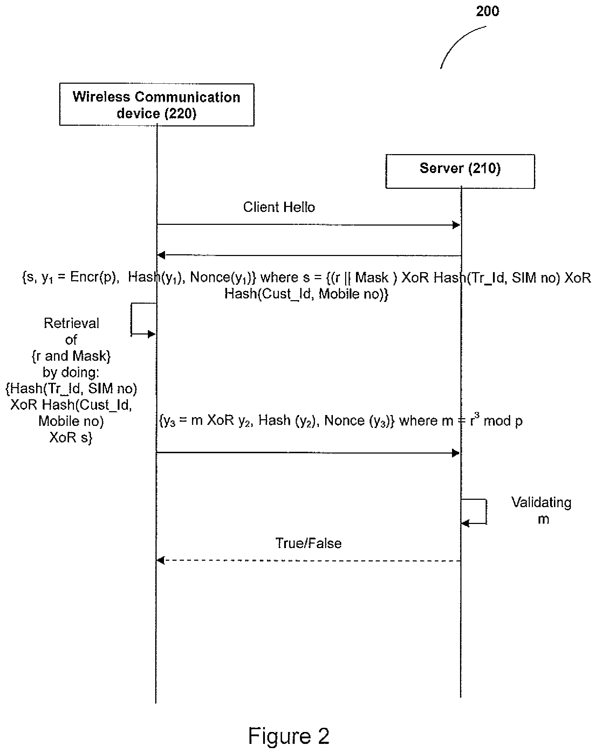

Figure 2 illustrates the secure transaction of data using EAP Protocol based on SKE (Symmetric Key Encryption) mechanism-1 between server and wireless communication device. A system 200 comprises a server 210 and a wireless communication device 220 are communicatively coupled with each other via communication network, wherein the communication network can be selected from the group of Wide area network (WAN), Local Area Network (LAN) or Metropolitan Area Networks (MAN), internet, and intranet, etc. In a preferred embodiment, the communication network is internet. The wireless communication device 220 can be selected from one of the group of mobile handsets, smart phones, PDAs, cellular phones, or tiny devices and the wireless communication device enabled with 2G, 3G, or 4G networks. In a preferred embodiment, the wireless communication device 220 is mobile phone.

A method of communication used in the above said system 200 comprising receiving, from at least one wireless communication device 220, a connection attempt to access a server 210, performing an authentication process using lightweight Extensible Authentication Protocol (EAP) based on the Symmetric Key Encryption (SKE) mechanism to facilitate the wireless communication device 220 prior to being allowed access to the server 210, wherein the said authentication process comprising the following steps:
In the first step of the proposed method, the wireless communication device 220 initiates the communication by sending client hello message to the server 210, wherein the client hello message includes a list of encryption algorithms that the wireless communication device 220 is prepared to use and some challenge data to be used to authenticate the server 210. The message contains the following fields:

| **CLIENT HELLO MESSAGE** | |
|---|---|
| **Field** | **Length** |
| The message type (client hello) | 8 bits |
| The SSL version number (currently 2) | 16 bits |
| The length of the cipher list | 16 bits |
| The length of the session identifier | 16 bits |
| The length of the challenge data | 16 bits |
| The cipher list | variable |
| The session identifier | 16≤ data ≤ 32 bytes |
| The challenge data | variable |

The session identifier is used to match the current request with a previous one, avoiding the need for repeated authenticate and key exchange if two systems have frequent communication. When keys are selected the server 210 will cache these and, if the wireless communication device 220 provides a session identifier in the client hello message the server 210 will search the cache for this session identifier. According to one exemplary embodiment, the message contains the above mentioned fields as well as additionally 'buffer memory' field having the length of 32 bits. The field and length of the client hello message can be varied based on the requirements.

In the second step, the server 210 generates a random number 'r' upon receiving client hello message and prime number 'p' (= 2 mod 3). According to one exemplary embodiment, the size of the random number 'r' is 192-bit and the size of the prime number 'p' is 64-bit. Subsequently the server 210 computes a resultant masking process of random number {s = (r ∥ Mask) XoR Hash(Tr_Id, SIM no) XoR Hash(Cust_Id, Mobile no)} using the generated random number 'r', Mask, a transaction ID, Customer ID, Device Number by matching hash function, a nonce value for security, wherein the Mask = 64-bits. The server 210 encrypts a message with the resultant masking process of random number 's', a resultant masking value 'y1' using hash function, further adding a nonce value for security and then the server 210 sends the encrypted message {s, y1 = Encr(p), Hash(y1), Nonce(y1)} to the wireless communication device 220.

In the third step, the wireless communication device 220 retrieves the random number 'r' and the Mask {Hash(Tr_Id, SIM no) XoR Hash(Cust_Id, Mobile no) XoR s} by matching hash function upon receiving the encrypted message and subsequently the wireless communication device 220 splits the Mask and the random number 'r' which is used to decrypt the {y1}, upon recovering the prime number 'p', verifies the hash value of the received resultant masking value {Hash(y1)}. Then the wireless communication device 220 computes a resultant value {r3 =(r mod p)3 mod p}, which is obtained using permutation technique of the random number and subsequently the wireless communication device 220 encrypts a message {y3 = r3 XoR y2, Hash(y2), Nonce(y3)} with a new second random number y2 by matching hash function and further adding a nonce value for security and then the wireless communication device 220 sends the resultant encrypted message to the server 210, wherein the second new random number 'y2' is generated using the Pseudo Random Number Generator (PRNG) method.

In the fourth step, the server 210 computes a cubing value of the random number {r3} and subsequently the server 210 gets the second new random number {'y2' by y3XoR r3} using the cubing value of the random number and XOR function and then the server 210 verifies the hash value of the received message {Hash (y2)} and Nonce value of the received resultant encrypted message {Nonce (y3).

In the final step, the server 210 sends the response upon verifying hash value of the received message {Hash (y2)} and Nonce value of the received resultant encrypted message {Nonce (y3)} to the wireless communication device 220.

Before initiating the communication in the above said system 200, initially, the server 210 registers the device and IMEI numbers of the wireless communication device 220 and then distributing customer identity and transaction identity (Cust_ID and Tr_ID) to each wireless communication devices 220 prior to being allowed access to the server 210.

According to one exemplary embodiment, the wireless communication device 220 is mobile phone. Accordingly the server 210 registers mobile and IMEI numbers and distributes customer identity and transaction identity (Cust_ID and Tr_ID) to each mobile 220 prior to being allowed access to the server 210 and subsequently the server 210 uses AES-CTR-192-bit algorithm for encrypting a message and a known Pseudo Random Number Generator (PRNG) which accepts a seed for generating the random numbers.

### Example of the secure transaction of data using EAP Protocol based on SKE (Symmetric Key Encryption) mechanism-1:

1. Cust_ID = 2323; Tr_ID = 3542234
2. Mobile no = 9885076432; IMEI = 74398483299329
3. Hash(Tr_ID, SIM no) = 12495405401234511; Hash(Cust_ID, Mobile no) = 232311212121
4. Server generates a 192-bit random number r = 12432534343 and a 64-bit prime no p = 101 where p is 2 mod 3
5. Server computes r∥Mask = 124325343435783459321 and s = 66391475877301.
6. Server uses r to find Encᵣ(p) = 43484349 and sends {124330942610003772911, 43484349, 232321, 14}to the wireless communication device
7. Wireless communication device retrieves r∥Mask = 124325343435783459321 by Hash (Tr_ID, SIM no) XoR Hash(Cust_ID, Mobile no) XoR s and splits r = 12432534343 and Mask = 5783459321.
8. Wireless communication device computes r³=r³ mod p = 41, generates a random number y₂ = 145 and sends (184, 343435, 4} to the server, where Hash (145) = 343435.
9. Server computes r³ = r³ mod p = 41, gets y₂ = 145 by y₃ XoR r³ and verifies Hash(y₂) and Nonce(y₃).

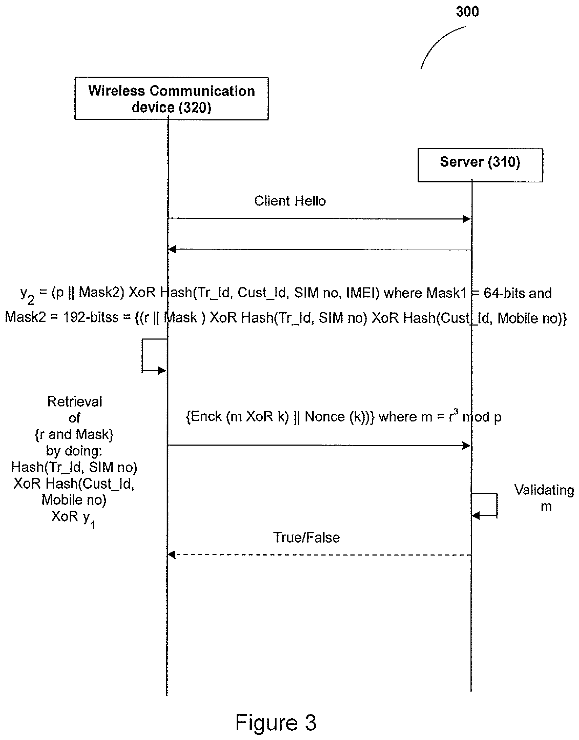

Figure 3 illustrates the secure transaction of data using EAP Protocol based on SKE (Symmetric Key Encryption) mechanism-2 between server and wireless communication device. A system 300 comprises a server 310 and a wireless communication device 320 are communicatively coupled with each other via communication network, wherein the communication network can be selected from the group of Wide area network (WAN), Local Area Network (LAN) or Metropolitan Area Networks (MAN), internet, and intranet, etc. In a preferred embodiment, the communication network is internet. The wireless communication device 320 can be selected from one of the group of mobile handsets, smart phones, PDAs, cellular phones, or tiny devices and the wireless communication device enabled with 2G, 3G, or 4G networks. In a preferred embodiment, the wireless communication device 320 is mobile phone.

A method of communication used in the above said system 300 comprising receiving, from at least one wireless communication device 320, a connection attempt to access a server 310, performing an authentication process using lightweight Extensible Authentication Protocol (EAP) based on the Symmetric Key Encryption (SKE) mechanism to facilitate the wireless communication device 320 prior to being allowed access to the server 310, wherein the said authentication process comprising the following steps:
In the first step of the proposed method, the wireless communication device 320 initiates the communication by sending client hello message to the server 310, wherein the client hello message includes a list of encryption algorithms that the wireless communication device 320 is prepared to use and some challenge data to be used to authenticate the server 310. The message contains the following fields:

| **CLIENT HELLO MESSAGE** | |
|---|---|
| **Field** | **Length** |
| The message type (client hello) | 8 bits |
| The SSL version number (currently 2) | 16 bits |
| The length of the cipher list | 16 bits |
| The length of the session identifier | 16 bits |
| The length of the challenge data | 16 bits |
| The cipher list | variable |
| The session identifier | 16≤ data ≤ 32 bytes |
| The challenge data | variable |

The session identifier is used to match the current request with a previous one, avoiding the need for repeated authenticate and key exchange if two systems have frequent communication. When keys are selected the server 310 will cache these and, if the wireless communication device 320 provides a session identifier in the client hello message the server 310 will search the cache for this session identifier. According to one exemplary embodiment, the message contains the above mentioned fields as well as additionally 'buffer memory' field having the length of 32 bits. The field and length of the client hello message can be varied based on the requirements.

In the second step, the server 310 generates a random number 'r' upon receiving client hello message and prime number 'p' (= 2 mod 3). According to one exemplary embodiment, the size of the random number 'r' is 192-bit and the size of the prime number 'p' is 64-bit. Subsequently the server 310 computes first resultant masking value { y1 = (r ∥ Mask1) XoR Hash(Tr_Id, SIM no) XoR Hash(Cust_Id, Mobile no)} using the generated random number by matching hash function, Mask1 and other parameters, wherein the Mask = 64-bits, then computes second resultant masking value {y2 =(p ∥ Mask2) XoR Hash(Tr_Id, Cust_Id, SIM no, IMEI)} using generated random number by matching hash function, Mask2 and other parameters, wherein the Mask = 64-bits; subsequently the server 310 encrypts a message with the first resultant masking value y1 and the prime number by matching hash function and adding a nonce value for security, second resultant masking value y2 and then the server 310 sends the encrypted message {y1, y2, Hash(y1 ∥ p), Nonce(y1)} to the wireless communication device 320.

In the third step, the wireless communication device 320 retrieves the random number 'r' and the Mask1 {Hash(Tr_Id, SIM no) XoR Hash(Cust_Id, Mobile no) XoR y1} by matching hash function upon receiving the encrypted message and subsequently the wireless communication device 320 splits the Mask1 and the random number 'r'. Similarly, the wireless communication device 320 upon extracting the prime number 'p', then verifies hash value of the first resultant masking value y1 with the extracted prime number 'p' { Hash(y1 ∥ p)}, Nonce function with the first resultant masking value y1, {Nonce(y1)}, then the wireless communication device 320 computes a resultant value {r3 =(r mod p)3 mod p}, which is obtained using permutation technique of the random number, then generates a 102-bit private key "k" using the Deterministic Random Sequence Generation (DRSG) algorithm DRSG(r,t1, t2) where t1 = 0 and t2 = Nonce(r3). Then the wireless communication device 320 encrypts a message {Enck(r3XoR k) ∥ Nonce(k))} with the cubing value of the random number and further adding a nonce value for security and then the wireless communication device 320 sends the resultant encrypted message to the server 310.

In the fourth step, the server 310 retrieves the private key 'k' by cubing value of the random number {r3} and subsequently the server 310 gets a resultant value, which is obtained from XOR function of the private key 'k' of the wireless communication device 320 with cubing value of the random number {r3} through decryption, then the server 310 splits the cubing value of the random number {r3} and the private key 'k'. Subsequently the server 310 verifies the private key with Nonce value for security {Nonce (k)} from the received encrypted message.

In the final step, the server 310 sends the response upon verifying the private key with Nonce value for security {Nonce (k)} from the received encrypted message to the wireless communication device 320.

Before initiating the communication in the above said system 300, initially, the server 310 registers the device and IMEI numbers of the wireless communication device 320 and then distributing customer identity and transaction identity (Cust_ID and Tr_ID) to each wireless communication devices 320 prior to being allowed access to the server 310.

According to one exemplary embodiment, the wireless communication device 320 is mobile phone. Accordingly, the server 310 registers mobile and IMEI numbers and distributes customer identity and transaction identity (Cust_ID and Tr_ID) to each mobile 320 prior to being allowed access to the server 310 and subsequently the server 310 uses AES-CTR-192-bit algorithm for encrypting a message and a known Pseudo Random Number Generator (PRNG) which accepts a seed for generating the random numbers.

### Example of the secure transaction of data using EAP Protocol based on SKE (Symmetric Key Encryption) mechanism-2:

1. Cust_ID=2323; Tr_ID =3542234
2. Mobile no = 9885076432; IMEI = 74398483299329
3. Hash(Tr_ID, SIM no) = 12495405401234511; Hash(Cust_ID, Mobile no) = 232311212121; Hash(Tr_ID, Cust_ID, SIM no, IMEI) = 34343421122
4. Prime number p = 101 where p is 2 mod 3
5. Server generates a random number r = 124325, Mask1 = 5783459 and Mask2 = 53434116432
6. Server computes y₁ = 32423423 and y₂ = 43556121
7. Server sends { 32423423, 43556121, 1343444, 15}
8. Wireless communication device retrieves 1243255783459 by doing Hash(Tr_Id, SIM no) XoR Hash(Cust_Id, Mobile no) XoR y₁ and finds r = 124325 and Mask1 = 5783459
9. Server uses k to find Encₖ(s) = 43434343 and sends {66391475877301, 43434343, 232321, 18} to the wireless communication device.
10.Wireless communication device uses k to get s and finds r = 124325 and Mask = 5783459321 by Hash (Tr_ID, SIM no) XoR Hash (Cust_ID, Mobile no) XoR s.
11.Wireless communication device computes r³=r³ mod p = 87, generates y₂ = 145 and sends (198, 343434, 4} to the server.
12.Server computes r³ = r³ mod p = 87, gets y₂ = 145 by y₃ XoR r³ and verifies Hash(y₂) and Nonce(y₃).

According to one embodiment, the hash function is matched, in the above proposed systems and methods in order to maintain a secure communication to avoid phishing and replay attacks and according to another embodiment, the nonce value is added, in the above mentioned systems and methods in order to maintain a secure communication to avoid phishing and replay attacks. Further, hashing and nonce methods are used to avoid Initial Counter Prediction and Time Memory Trade Off attacks.

### Strengths of EAP Protocol based on ECC (Elliptic Curve Cryptography) and SKE (Symmetric Key Encryption) mechanisms:

1. From Base station to GPRS core network via Network subsystems, our EAP (Protocol 1: EAP based on ECC mechanism) works in a speedy manner due to the usage of ECC-163 bits between the nodes.
2. In the protocol 1(EAP based on ECC mechanism), it is difficult to generate a signed message by an attacker; since the permutation
3. r → r³ = r³ mod p (where p = 2 mod 3) is random.
4. Similarly, it is difficult to predict a random number r (supplied by the server) in protocols 1, 2 and 3 (EAPs based on ECC mechanism and SKE mechanisms 1 & 2); since the mapping r → r³ = r³ mod p is bijective.
5. The protocols (EAPs based on ECC mechanism and SKE mechanisms 1 & 2) are compatible to 2G, 3G or 4G mobile networks.
6. No key agreement between different domains and key expiration are not there in our protocols (EAPs based on ECC mechanism and SKE mechanisms 1 & 2).
7. EAPs are suitable for WLANs and WMANs and are better than the existing EAPs which are vulnerable to a number of attacks - dictionary attack, plain text attack, chosen plain text attack, even man in the middle attack.

The application is described in the example given below which is provided only to illustrate the application and therefore should not be construed to limit the scope of the application.

### Requirements:

### EAP Application Environment is as mentioned below:

### a) Software Environment

**TABLE 1:**

| **Operating System** | Windows XP/ 2003 SP3 |
|---|---|
| **Software/Tools** | WTK2.5.2, Log4Net |

### b) Hardware Environment

**TABLE 2:**

| **Workstation Client** | Windows XP with SP3 |
|---|---|
| **Test Server** | 4 GB RAM, Intel Core 2 vPro 160 GB HDD, E6550 as processor |
| **Mobile** | J2ME enabled Mobile with GPRS connectivity. |

### Initial Test Set-up

### a) EAP Client:

1) Basically EAP client will Installed in Mobile devices (for e.g. Nokia N79, E75, 5800-ExpressMusic, 6210 Navigator).
2) It is a J2ME Code which will do the encryption & decryption of data.
3) It will contact the server and communicate through a secure channel.

### b) EAP Server:

1) A server application built using .NET framework, which is used for decryption & encryption of data.
2) Decrypts the Client request and send the response back in encrypted format.

### EAP Application Flow Diagram with performance

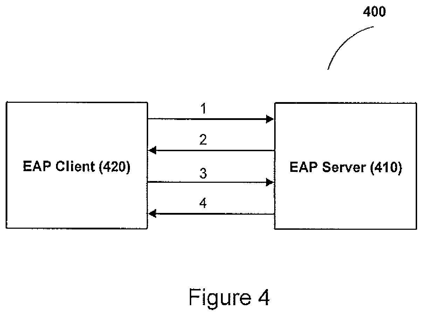

Figure 4 illustrates flow diagram with performance 400 by using lightweight EAP Protocols for secure transaction of data between wireless communication device and server. In the first step, client 420 initiates the communication by sending client hello message to the server 410 {1 → ClientInitiate() - request}. In the second step, the server 410 sends hexadecimal sequence as a response upon receiving the client hello message from the client 420 {2 → Hexa decimal sequence(response)}. In the third step, the client 420 sends request message using the EAP protocol to server 410 for initiating secure transaction of data between them {3 → EAP Protocol()- request}. In the fourth step, the server 410 sends the response upon validating the protocol to the client 420 {4 → true/false (response). In the final step, if the response is 'true" then the secure transaction of data process starts between the client and the server, otherwise, the response is 'false", the communication ends between them.

### Test Results:

Nokia handset series N79, E75, 5800 and 6210 support these EAP Client modules. As per the performance, Nokia has done 'EAP flow' and the server checks the authentication response in < 0.5 ms. This is a remarkable performance compared to certificate based transactions where the authentication response from server end takes > 1 sec.

The preceding description has been presented with reference to various embodiments. Persons skilled in the art and technology to which this application pertains will appreciate that alterations and changes in the described structures and methods of operation can be practiced without meaningfully departing from the principle and scope.

## Claims

1. A method of authenticating a wireless communication device (120) for secure transaction of data between the communication device (120) and a server(110), the method comprising:
receiving, by the server(110), a first message transmitted by the communication device(120), the first message comprising challenge data to authenticate the server(110);
generating a random number by the server(110);
computing, by the server(110), a masking process of the random number using the random number, a mask, and one or more parameters;
generating, by the server(110), a first encrypted message using a result of the masking process, a nonce value for security, a public key of the communication device and an ECE encryption algorithm;
transmitting, by the server(110), the first encrypted message to the communication device;
decrypting, by the communication device(120), the first encrypted message in order to retrieve the random number using a private key of the communication device(120) and an ECE decryption algorithm;
computing, by the communication device (120), a second message r³ mod p using a permutation technique of the random number, r-> r³= r³mod p, which is a bijective map, r being the random number and p being a prime number;
generating, by the communication device (120), a resultant message by signing the second message using an ECDSA-163 algorithm and the private key of the communication device (120) ;
transmitting, by the communication device (120), the resultant message to the server(110);
computing, by the server (110), a second message r³ mod p using a permutation technique of the random number, r-> r³= r³mod p, which is a bijective map, r being the random number and p being the prime number;
verifying, by the server (110), the resultant message using the public key of the communication device generating a response based on the verification; and
transmitting the response to the communication device(120) by the server(110).

2. The method of Claim 1, wherein generating the first encrypted message comprises using a hash function of the masking process.

3. A method of authenticating a wireless communication device(220) for secure transaction of data between at least one communication device(220) and a server(210), the method comprising the steps of:
receiving, by the server(210), a first message transmitted by the communication device(220), the first message comprises challenge data to authenticate the server(210);
generating, by the server(210), a first random number and a prime number at the server(210);
computing, by the server(210), a masking process using the first random number, a mask, a nonce value for security, and one or more parameters;
encrypting, by the server (210), the prime number using the first random number;
generating, by the server(210), a first encrypted message using a result of the masking process, a masking value produced using a hash function on the encrypted prime number, and a nonce value for security;
transmitting, by the server(210), the first encrypted message to the communication device;
decrypting, by the communication device(220), the first encrypted message in order to retrieve the first random number and the mask, the first random number being used for decrypting the prime number;
generating, by the communication device(220), a second encrypted message by using
a hash function of a second random number (y2),
a nonce value for security, and
XORing a resultant value r³ mod p and y2, said resultant value being obtained using a permutation technique of the first random number, r-> r³ mod p, which is a bijective map, r being the first random number and p being the prime number ;
transmitting, by the communication device, the second encrypted message to the server(210);
computing, by the server(210), the second random number by XORing the second encrypted message with a cube of the first random number;
verifying, by the server(210), a hash value of the second random number and nonce value of the second encrypting message;
generating, by the server(210), a response based on the verification; and
transmitting, by the server(210), the response to the communication device(220) by the server.

4. The method of Claim 3, wherein the second random number is generated using a Pseudo Random Number Generator (PRNG) method.

5. A system for authenticating a wireless communication device(220) for secure transaction of data between at least one communication device(220) and a server(210), the system comprising:
the communication device(220) for generating a first message comprising challenge data to authenticate the server(210);
a random number generator at the server(210) configured to generate a first random number;
computing by the server(210), a masking process using the first random number, a mask, a nonce value for security, and one or more parameters;
encrypting, by the server (210), the prime number using the first random number;
a prime number generator at the server(210) configured to generate a prime number;
a first encryption module at the server(210) configured to generate
a first encrypted message by using a result of the masking process, a masking value produced using a hash function on the encrypted prime number, and a nonce value for security;
a communication device(220) configured to receive the first encrypted message from the server(210);
a first decryption module at the communication device(220) configured to decrypt the first encrypted message in order to retrieve the first random number and the mask, the first random number being used for decrypting the prime number;
a random number generator at the communication device(220) configured to generate a second random number;
a second encryption module at the communication device(220) configured to generate a second encrypted message by using a hash function of the second random number (y2),
a nonce value for security, and XORing a resultant value r³ mod p and y2, said resultant value being obtained using a permutation technique of the first random number, r-> r³ mod p, which is a bijective map, r being the first random number and p being the prime number;
a transceiver at the communication device configured to transmit the second encrypted message from the communication device(220) to the server(210);
computing by the server, the second random number by XORing the second encrypted message with a cube of the first random number;
a second decryption module at the server(210) configured to decrypt the second encrypted message; and
a verification module at the server(210) configured to verify a hash value of the second random number and nonce value of the second encrypting message.

6. The system of Claim 5, wherein the wireless communication device (220) is enabled to operate using a 2G, 3G, or 4G communication protocol.

## Patentansprüche

1. Verfahren zum Authentifizieren einer drahtlosen Kommunikationsvorrichtung (120) zur sicheren Datenübertragung zwischen der Kommunikationsvorrichtung (120) und einem Server (110), wobei das Verfahren umfasst:
Empfangen durch den Server (110) einer ersten, von der Kommunikationsvorrichtung (120) übertragenen Nachricht, wobei die erste Nachricht Abfragedaten zur Authentifizierung des Servers enthält (110);
Erzeugen einer Zufallszahl durch den Server (110);
Errechnen eines Maskierungsprozesses der Zufallszahl durch den Server (110) unter Verwendung der Zufallszahl, einer Maske und eines oder mehrerer Parameter;
Erzeugen einer ersten verschlüsselten Nachricht durch den Server (110) unter Verwendung eines Ergebnisses des Maskierungsprozesses, eines Nonce-Wertes für die Sicherheit, eines öffentlichen Schlüssels der Kommunikationsvorrichtung und eines ECE-Verschlüsselungsalgorithmus;
Senden der ersten verschlüsselten Nachricht durch den Server (110) an die Kommunikationsvorrichtung;
Entschlüsseln der ersten verschlüsselten Nachricht durch die Kommunikationsvorrichtung (120), um die Zufallszahl unter Verwendung eines privaten Schlüssels der Kommunikationsvorrichtung (120) und eines ECE-Verschlüsselungsalgorithmus abzurufen;
Errechnen einer zweiten Nachricht r³mod p durch die Kommunikationsvorrichtung (120) unter Verwendung einer Permutationstechnik der Zufallszahl, r-> r³= r³mod p, die eine bijektive Abbildung ist, wobei r die Zufallszahl und p eine Primzahl ist;
Erzeugen einer Ergebnisnachricht durch die Kommunikationsvorrichtung (120), durch Signieren der zweiten Nachricht unter Verwendung eines ECDSA-163-Algorithmus und des privaten Schlüssels der Kommunikationsvorrichtung (120);
Senden der Ergebnisnachricht durch die Kommunikationsvorrichtung (120) an den Server (110);
Errechnen durch den Server (110) einer zweiten Nachricht r³ mod p unter Verwendung einer Permutationskechnik der Zufallszahl, r-> r³= r³mod p, die eine bijektive Abbildung ist, wobei r die Zufallszahl und p die Primzahl ist;
Verifizieren der Ergebnisnachricht durch den Server (110) unter Verwendung des öffentlichen Schlüssels der Kommunikationsvorrichtung;
Erzeugen einer Antwort auf der Grundlage der Verifizierung; und
Senden der Antwort an die Kommunikationsvorrichtung (120) durch den Server (110).

2. Verfahren nach Anspruch 1, wobei das Erzeugen der ersten verschlüsselten Nachricht die Verwendung einer Hash-Funktion des Maskierungsprozesses umfasst.

3. Verfahren zum Authentifizieren einer drahtlosen Kommunikationsvorrichtung (220) zur sicheren Datenübertragung zwischen mindestens einer Kommunikationsvorrichtung (220) und einem Server (210), wobei das Verfahren folgende Schritte umfasst:
Empfangen durch den Server (210) einer ersten, von der Kommunikationsvorrichtung (220) übertragenen Nachricht, wobei die erste Nachricht Abfragedaten zur Authentifizierung des Servers enthält (110);
Erzeugen durch den Server (210) einer ersten Zufallszahl und einer Primzahl auf dem Server (210);
Errechnen eines Maskierungsprozesses durch den Server (210) unter Verwendung der ersten Zufallszahl, einer Maske, eines Nonce-Wertes für die Sicherheit, und eines oder mehrerer Parameter;
Verschlüsseln der Primzahl durch den Server (210) mit der ersten Zufallszahl;
Erzeugen einer ersten verschlüsselten Nachricht durch den Server (210) unter Verwendung eines Ergebnisses des Maskierungsprozesses, eines unter Anwendung einer Hash-Funktion auf die verschlüsselte Primzahl erzeugten Maskierungswertes, und eines Nonce-Wertes für die Sicherheit;
Senden der ersten verschlüsselten Nachricht durch den Server (210) an die Kommunikationsvorrichtung;
Entschlüsseln der ersten verschlüsselten Nachricht durch die Kommunikationsvorrichtung (220), um die erste Zufallszahl und die Maske abzurufen, wobei die erste Zufallszahl zum Entschlüsseln der Primzahl verwendet wird;
Erzeugen einer zweiten verschlüsselten Nachricht durch die Kommunikationsvorrichtung (220), unter Verwendung
einer Hash-Funktion einer zweiten Zufallszahl (y2),
eines Nonce-Wertes für die Sicherheit, und
XORieren eines Ergebniswertes r³ mod p und y2, wobei der Ergebniswert mittels einer Permutationstechnik der ersten Zufallszahl, r-> r³ mod p, erhalten wird, die eine bijektive Abbildung ist, wobei r die Zufallszahl und p die Primzahl ist;
Senden der zweiten verschlüsselten Nachricht an die Kommunikationsvorrichtung durch den Server (210);
Errechnen der zweiten Zufallszahl durch den Server (210) durch XORieren der zweiten verschlüsselten Nachricht mittels einer dritten Potenz der ersten Zufallszahl;
Verifizieren eines Hash-Wertes der zweiten Zufallszahl und eines Nonce-Wertes der zweiten verschlüsselten Nachricht durch den Server (210);
Erzeugen einer Antwort durch den Server (210) basierend auf der Verifizierung; und
Übermitteln der Antwort des Servers (210) an die Kommunikationsvorrichtung (220) durch den Server.

4. Verfahren nach Anspruch 3, wobei die zweite Zufallszahl unter Verwendung eines Pseudozufallszahlgenerator (PRNG)-Verfahrens erzeugt wird.

5. System zum Authentifizieren einer drahtlosen Kommunikationsvorrichtung (220) zur sicheren Datenübertragung zwischen der Kommunikationsvorrichtung (220) und einem Server (210), wobei das System umfasst:
die Kommunikationsvorrichtung (220) zum Erzeugen einer ersten Nachricht mit Abfragedaten zur Authentifizierung des Servers (210);
einen Zufallszahlengenerator auf dem Server (210), der dazu konfiguriert ist, eine erste Zufallszahl zu erzeugen;
Errechnen eines Maskierungsprozesses durch den Server (210) unter Verwendung der ersten Zufallszahl, einer Maske, eines Nonce-Wertes für die Sicherheit, und eines oder mehrerer Parameter;
Verschlüsseln der Primzahl durch den Server (210) mit der ersten Zufallszahl;
einen Zufallszahlengenerator auf dem Server (210), der dazu konfiguriert ist, eine Primzahl zu erzeugen;
ein erstes Verschlüsselungsmodul auf dem Server (210), das dazu konfiguriert ist, eine erste verschlüsselte Nachricht unter Verwendung eines Ergebnisses des Maskierungsprozesses, eines unter Anwendung einer Hash-Funktion auf die verschlüsselte Primzahl erzeugten Maskierungswertes, und eines Nonce-Wertes für die Sicherheit zu erzeugen;
eine Kommunikationsvorrichtung (220), die dazu konfiguriert ist, die erste verschlüsselte Nachricht vom Server (210) zu erhalten;
ein erstes Entschlüsselungsmodul auf der Kommunikationsvorrichtung (220), das dazu konfiguriert ist, die erste verschlüsselte Nachricht zu entschlüsseln, um die erste Zufallszahl und die Maske abzurufen, wobei die erste Zufallszahl zum Entschlüsseln der Primzahl verwendet wird;
einen Zufallszahlengenerator auf der Kommunikationsvorrichtung (220), der dazu konfiguriert ist, eine zweite Zufallszahl zu erzeugen;
ein zweites Verschlüsselungsmodul auf der Kommunikationsvorrichtung (220), das dazu konfiguriert ist, eine zweite verschlüsselte Nachricht zu erzeugen, unter Verwendung
einer Hash-Funktion der zweiten Zufallszahl (y2),
eines Nonce-Wertes zur Sicherheit, und
XORieren eines Ergebniswertes r³ mod p and y2, wobei der Ergebniswert mittels einer Permutationstechnik der ersten Zufallszahl, r-> r³ mod p, erhalten wird, die eine bijektive Abbildung ist, wobei r die Zufallszahl und p die Primzahl ist;
einen Transceiver an der Kommunikationsvorrichtung, der konfiguriert ist, die zweite verschlüsselte Nachricht von der Kommunikationsvorrichtung (220) an den Server (210) zu übertragen;
Errechnen der zweiten Zufallszahl durch den Server mittels XORieren der zweiten verschlüsselten Nachricht mit einer dritten Potenz der ersten Zufallszahl;
ein zweites Entschlüsselungsmodul auf dem Server (210), das zum Entschlüsseln der zweiten verschlüsselten Nachricht konfiguriert ist; und
ein Verifizierungsmodul auf dem Server (210), das zur Verifizierung eines Hash-Wertes der zweiten Zufallszahl und eines Nonce-Wertes der zweiten verschlüsselten Nachricht konfiguriert ist.

6. System nach Anspruch 5, wobei die drahtlose Kommunikationsvorrichtung (220), mit einem 2G-, 3G- oder 4G-Kommunikationsprotokoll betrieben werden kann.

## Revendications

1. Procédé d'authentification d'un dispositif de communication sans fil (120) pour une transaction sécurisée de données entre le dispositif de communication (120) et un serveur (110), le procédé comprenant les étapes consistant à :
recevoir, par le serveur (110), un premier message transmis par le dispositif de communication (120), le premier message comprenant des données de demande d'accès pour authentifier le serveur (110) ;
générer un nombre aléatoire par le serveur (110) ;
calculer, par le serveur (110), un processus de masquage du nombre aléatoire en utilisant le nombre aléatoire, un masque et un ou plusieurs paramètres ;
générer, par le serveur (110), un premier message crypté en utilisant un résultat du processus de masquage, une valeur de nonce pour la sécurité, une clé publique du dispositif de communication et un algorithme de cryptage ECE ;
transmettre, par le serveur (110), le premier message crypté au dispositif de communication ;
décrypter, par le dispositif de communication (120), le premier message crypté afin de récupérer le nombre aléatoire en utilisant une clé privée du dispositif de communication (120) et un algorithme de décryptage ECE ;
calculer, par le dispositif de communication (120), un deuxième message r³ mod p en utilisant une technique de permutation du nombre aléatoire, r-> r³= r³ mod p, qui est une carte bijective, r étant le nombre aléatoire et p étant un nombre premier ;
générer, par le dispositif de communication (120), un message résultant en signant le deuxième message en utilisant un algorithme ECDSA-163 et la clé privée du dispositif de communication (120) ;
transmettre, par le dispositif de communication (120), le message résultant au serveur (110) ;
calculer, par le serveur (110), un deuxième message r³ mod p en utilisant une technique de permutation du nombre aléatoire, r-> r³= r³ mod p, qui est une carte bijective, r étant le nombre aléatoire et p étant le nombre premier ;
vérifier, par le serveur (110), le message résultant en utilisant la clé publique du dispositif de communication,
générer une réponse basée sur la vérification ; et
transmettre la réponse au dispositif de communication (120) par le serveur (110).

2. Procédé selon la revendication 1, dans lequel l'étape consistant à générer le premier message crypté consiste à utiliser une fonction de hachage du processus de masquage.

3. Procédé d'authentification d'un dispositif de communication sans fil (220) pour une transaction sécurisée de données entre au moins un dispositif de communication (220) et un serveur (210), le procédé comprenant les étapes consistant à :
recevoir, par le serveur (210), un premier message transmis par le dispositif de communication (220), le premier message comprenant des données de demande d'accès pour authentifier le serveur (210) ;
générer, par le serveur (210), un premier nombre aléatoire et un nombre premier au niveau du serveur (210) ;
calculer, par le serveur (210), un processus de masquage en utilisant le premier nombre aléatoire, un masque, une valeur de nonce pour la sécurité et un ou plusieurs paramètres ;
crypter, par le serveur (210), le nombre premier en utilisant le premier nombre aléatoire ;
générer, par le serveur (210), un premier message crypté en utilisant un résultat du processus de masquage, une valeur de masquage produite en utilisant une fonction de hachage sur le nombre premier crypté et une valeur de nonce pour la sécurité ;
transmettre, par le serveur (210), le premier message crypté au dispositif de communication ;
décrypter, par le dispositif de communication (220), le premier message crypté afin de récupérer le premier nombre aléatoire et le masque, le premier nombre aléatoire étant utilisé pour décrypter le nombre premier ;
générer, par le dispositif de communication (220), un deuxième message crypté en utilisant une fonction de hachage d'un deuxième nombre aléatoire (y2), une valeur de nonce pour la sécurité, et
effectuer un OU exclusif entre une valeur résultante r³ mod p et y2, ladite valeur résultante étant obtenue en utilisant une technique de permutation du premier nombre aléatoire, r-> r³ mod p, qui est une carte bijective, r étant le premier nombre aléatoire et p étant le nombre premier ;
transmettre, par le dispositif de communication, le deuxième message crypté au serveur (210) ;
calculer, par le serveur (210), le deuxième nombre aléatoire en effectuant un OU exclusif sur le deuxième message crypté avec un cube du premier nombre aléatoire ;
vérifier, par le serveur (210), une valeur de hachage du deuxième nombre aléatoire et une valeur de nonce du deuxième message crypté ;
générer, par le serveur (210), une réponse basée sur la vérification ; et
transmettre, par le serveur (210), la réponse au dispositif de communication (220) par le serveur.

4. Procédé selon la revendication 3, dans lequel le deuxième nombre aléatoire est généré à l'aide d'un procédé de génération de nombres pseudo-aléatoires (PRNG).

5. Système d'authentification d'un dispositif de communication sans fil (220) pour la transaction sécurisée de données entre au moins un dispositif de communication (220) et un serveur (210), le système comprenant :
le dispositif de communication (220) pour générer un premier message comprenant des données de demande d'accès pour authentifier le serveur (210) ;
un générateur de nombres aléatoires au niveau du serveur (210), configuré pour générer un premier nombre aléatoire ;
le calcul par le serveur (210), d'un processus de masquage en utilisant le premier nombre aléatoire, un masque, une valeur de nonce pour la sécurité et un ou plusieurs paramètres ;
le cryptage, par le serveur (210), du nombre premier en utilisant le premier nombre aléatoire ;
un générateur de nombres premiers au niveau du serveur (210), configuré pour générer un nombre premier ;
un premier module de cryptage au niveau du serveur (210), configuré pour générer un premier message crypté en utilisant un résultat du processus de masquage, une valeur de masquage produite en utilisant une fonction de hachage sur le nombre premier crypté et une valeur de nonce pour la sécurité ;
un dispositif de communication (220) configuré pour recevoir le premier message crypté du serveur (210) ;
un premier module de décryptage au niveau du dispositif de communication (220), configuré pour décrypter le premier message crypté afin de récupérer le premier nombre aléatoire et le masque, le premier nombre aléatoire étant utilisé pour décrypter le nombre premier ;
un générateur de nombres aléatoires au niveau du dispositif de communication (220), configuré pour générer un deuxième nombre aléatoire ;
un deuxième module de cryptage au niveau du dispositif de communication (220), configuré pour générer un deuxième message crypté en utilisant une fonction de hachage du deuxième nombre aléatoire (y2), une valeur de nonce pour la sécurité, et
l'exécution d'un OU exclusif entre une valeur résultante r³ mod p et y2, ladite valeur résultante étant obtenue en utilisant une technique de permutation du premier nombre aléatoire, r-> r³ mod p, qui est une carte bijective, r étant le premier nombre aléatoire et p étant le nombre premier ;
un émetteur-récepteur au niveau du dispositif de communication, configuré pour transmettre le deuxième message crypté du dispositif de communication (220) au serveur (210) ;
le calcul par le serveur du deuxième nombre aléatoire en effectuant un OU exclusif sur le deuxième message crypté avec un cube du premier nombre aléatoire ;
un deuxième module de décryptage au niveau du serveur (210), configuré pour décrypter le deuxième message crypté ; et
un module de vérification au niveau du serveur (210), configuré pour vérifier une valeur de hachage du deuxième nombre aléatoire et une valeur de nonce du deuxième message de cryptage.

6. Système selon la revendication 5, dans lequel le dispositif de communication sans fil (220) est apte à fonctionner en utilisant un protocole de communication 2G, 3G ou 4G.
